# EUROPEAN PATENT SPECIFICATION

(11) **EP 4 592 742 B1**
(45) Date of publication and mention of the grant of the patent: **22.04.2026**
(21) Application number: 24382058.6
(22) Date of filing: 23.01.2024
(51) Int. Cl.: G02F 1/1334, E06B 9/24, G02F 1/1333, G02F 1/1343

(54) **SMART FILM FOR A LIGHT SHUTTER, AND METHOD FOR OPERATING THE SAME**
INTELLIGENTE FOLIE FÜR EIN LICHTVENTIL, UND VERFAHREN FÜR SEINEN BETRIEB
FILM INTELLIGENT POUR UN OBTURATEUR DE LUMIÈRE, ET SON PROCÉDÉ DE MISE EN OEUVRE

(43) Date of publication of application: 30.07.2025
(73) Proprietor: Dream Glass S. L., 28860 Paracuellos De Jarama (ES)
(72) Inventor: VILLAR MENÉNDEZ, José Manuel, 28860 Paracuellos De Jarama (ES); MESHKAT MAMALEK, Mojtaba, 28860 Paracuellos De Jarama (ES)
(74) Representative: TRBL Intellectual Property

(56) References cited:
- EP-A1- 3 444 656
- US-A1- 2017 075 153

## Description

### TECHNICAL FIELD

This invention belongs to the field of smart films and light shutters comprising an electrically modifiable element embedded between two conductive substrates.

### STATE OF THE ART

Smart film and light shutters are usually employed in producing immediate privacy and or images in partitioning and windows of showrooms, exhibitions, hotels or automotive industries.

These devices comprise a substance which has light transmission properties that may be altered when a voltage is applied. Generally, the substance behaves as opaque or translucid and becomes transparent when a voltage is applied.

Further, these devices may also be used as a barrier for UV and IR rays to save energy and bring comfort to the applied spaces.

As a specific example of switchable smart film, the polymer-dispersed liquid crystals (PDLC) are studied. In these devices, liquid crystals are dispersed into a liquid polymer, and then the polymer is cured. During this curing step, the liquid crystals, which are immiscible with the polymer, forming droplets throughout the solid polymer and Liquid Crystal particles inside the droplets align randomly leading to strong scattering of light, thus creating a translucid opaque film. The cured PDLC which is encapsulated between two layers of conductive transparent films, normally Indium Tin Oxide (ITO) on a Poly-Ethylene Terephthalate (PET) substrate, produces the smart film. This results in a translucent (commonly called opaque) state (which is usually called "OFF-state"). When a voltage is applied to the electrodes, the electric field formed between the two transparent conductive layers excites the liquid crystal particles to align in parallel perpendicularly to the substrates, allowing light to pass through with very little scattering and resulting in a transparent appearance (which is called "ON-state").

Document EP3444656A1 discloses a light control module which comprises a frame surrounding inter alia a light control sheet including a light control layer switchable between transparent and opaque states according to an applied voltage, a first electrode made of a transparent conductive material, and a second electrode facing the first electrode with the light control layer therebetween and made of a transparent conductive material; and a drive circuit applying a drive voltage to the first and second electrodes, wherein when a maximum transmittance of the light control layer is equivalent to a Munsell value of 100%, and a voltage is applied so that a transmittance equivalent to a Munsell value of 90% is obtained in a region closest to a feeding area, a transmittance higher than a transmittance equivalent to a Munsell value of 50% is obtained in a region farthest from the feeding area.

Document US 2017/075153 A1 discloses an optical composite layer structure with a built-in touch sensitive polymer dispersed liquid crystal (PDLC) structure. The optical composite layer structure comprises an upper transparent substrate, a lower transparent substrate, an upper transparent conductive layer, a lower transparent conductive layer and a PDLC layer. A PDLC circuit and a touch sensitive circuit are provided on the upper and lower transparent conductive layers. A cable region that is electrically connected to external soft circuit cables is provided at an end of the upper transparent conductive layer and the lower transparent conductive layer to electrically connect to an external control unit. With a touch sensitive operation of a touch sensitive circuit of the optical composite layer structure, a signal instruction is provided to the control unit. The corresponding PDLC circuit may drive the corresponding regions of PDLC layer to conduct the change of light transmission of local region.

The present invention uses this technology, but provides an advantageous system which improves the use and final result of the device.

### DESCRIPTION OF THE INVENTION

The invention provides an alternative solution for these smart films by means of a smart film according to claim 1, and a method for operating the smart film according to claim 14. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a smart film comprising a first transparent conductive electrode, a second transparent conductive electrode and an active optic material arranged between the first and the second transparent conductive electrodes in electric contact with the first and the second transparent conductive electrodes,
wherein the active optic material is configured to change at least one optical property when subject to an electrical voltage;
wherein the first transparent conductive electrode is divided into a plurality of sections, the plurality of sections comprising a first section and a plurality of intermediate sections, wherein the first section only neighbours with one intermediate section; and
wherein the smart film further comprises a frame, wherein the frame covers at least a portion of the first section.

The active optical material is a material that is configured to change at least one optical property (e.g., transparency to a particular range of light wavelength) when a voltage is applied between two sides of the same. There are many different types of active optical materials.

Due to this structure, the smart film may be used by activating the electric connections located in the first transparent conductive electrode. This smart film may be used as a light shutter and perform a sequential activation and deactivation of each section due to the presence of a narrow auxiliary section: the first section. This first section is at least partially covered by a frame so that it can be activated without being seen by the exterior user. It is used as an auxiliary section, and the reason will be shown below.

Since the invention is designed to be used only with the electric connections arranged on the first conductive electrode, the operation of the same involves the activation of at least two sections, to induce the current between these two sections so that they are activated. In the sequential activation or deactivation of the sections, it is possible that only one section is requested to be activated. In this case, the first section is used as an auxiliary section, so that only the first section and the intermediate section which is adjacent to the first section will be activated. The current will be induced between them and the two of them will be activated, but since the first section is covered by the frame, only the adjacent intermediate section will be seen as activated: i.e., only one section will be seen as activated (despite there is a hidden section which is also activated, the first section).

In some particular embodiments, the second transparent conductive electrode does not comprise any electric connection.

It is not necessary that the second transparent conductive electrode comprises any electric connection, since the invention may work despite there is an electric connection in the second transparent conductive electrode. The main advantage of this invention in comparison with known smart films that require the application of electric connections on both transparent conductive electrodes is evident, especially in case of mass production of segmented shutters. By having all electrodes on the first transparent conductive electrode, it is not required to reverse the film and apply the electric connections on the second conductive electrode. Further, if all the electric connections are located on the same side, they can be sealed at the same time, thus reducing production time and cost. Further, the elimination of the connection preparation eliminates the risk of short circuit between the two conductive electrodes.

In some particular embodiments, each section is limited by a straight etching cut.

A straight etching cut is useful to provide a light shutter, which is sequentially activated and deactivated.

In some particular embodiments, the smart film further comprises a control unit configured to provide electric supply to each of the sections, wherein the control unit is configured to provide a first signal to a first group of sections and a second signal to a second group of sections, wherein each section of the first group is surrounded by at least one section of the second group and wherein each section of the second group is surrounded by at least one section of the first group.

Despite the activation and deactivation of the device can be done in many different ways, an advantageous way to do it is to divide the sections into "odd sections" and "even sections" and provide (only to required sections of these groups) a first signal or a second signal, so that the sections are activated in pairs, each pair comprising an "odd section" and an "even section" and each pair having the same voltage.

In some particular embodiments, the control unit comprises a first element configured to receive a sinusoidal alternate current and transform it to a direct current signal and comprises a second element configured to transform the direct current signal to an alternate square wave, and comprises a third element configured to create the first and second signals as phase-shifted signals from the square wave.

There are also many ways of creating the electric signals. Square waves are easy and reliable, and provide a good result in the activation of PDLC films.

In some particular embodiments, the active optical material has a thickness comprised between 5 and 100 micrometres, while for the present application, a thickness comprised between 15 and 20 micrometres is most suitable.

In some particular embodiments, the first transparent conductive electrode and/or the second transparent conductive electrode comprises Indium Tin Oxide, silver nanowires, carbon nanotubes, graphene, transparent conductive polymers or nanometals.

These examples correspond to materials which provide a good compromise between transparency and electric conductivity.

In some particular embodiments, the first transparent conductive electrode is deposited on a first transparent substrate and/or the second transparent conductive electrode is deposited on a second transparent substrate.

The present invention may be applied on many different types of substrates. In some particular embodiments, the first transparent substrate and/or the second transparent substrate comprises a glass. In different particular embodiments, the first transparent substrate and/or the second transparent substrate comprises a plastic film, such a film made of polyethylene terephthalate.

In some particular embodiments, first transparent substrate and/or the second transparent substrate comprises an IR coating.

This is advantageous to block IR radiation.

In some particular embodiments, the active optical material comprises a Polymer-Dispersed Liquid Crystal.

This material can work with a wide range of voltage values, and provide good properties of transparency and opacity.

In some particular embodiments, the active optical material comprises a black dichroic dye Polymer Dispersed Liquid Crystal.

This material further produces black PDLC film and improves IR protection.

In a further inventive aspect, the invention provides a method for operating a smart film according to the first inventive aspect, comprising the steps of
providing a number of visible sections to be activated;
if the number of visible sections to be activated is an odd number, add the first section to a total number of sections to be activated; otherwise, the total number of sections to be activated is the number of visible sections to be activated;
dividing the total number of sections in a first group of sections and in a second group of sections, wherein each section of the first group of sections is neighboured by at least one section of the second group and wherein each section of the second group is neighboured by at least one section of the first group; and
providing a first signal to the sections of the first group of sections and a second signal to the sections of the second group of sections.

In some particular embodiments, the steps of providing the number of sections, dividing the number of sections and providing the first and second signals are repeated for different values of the number of sections.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a schematic view of a first embodiment of a film arrangement according to the invention.
Figures 2a to 2c show different scenarios of use of a first example of smart film according to the invention.
Figure 3 shows an example of a first signal and a second signal, to be used in the present invention.

In these figures, the following reference numbers have been used:
- 1: First transparent electrode
- 2: Second transparent electrode
- 3: Active optic material
- 4: PET sheet
- 5: PET sheet
- 6: Control unit
- 7: Frame
- 11-16: Sections

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

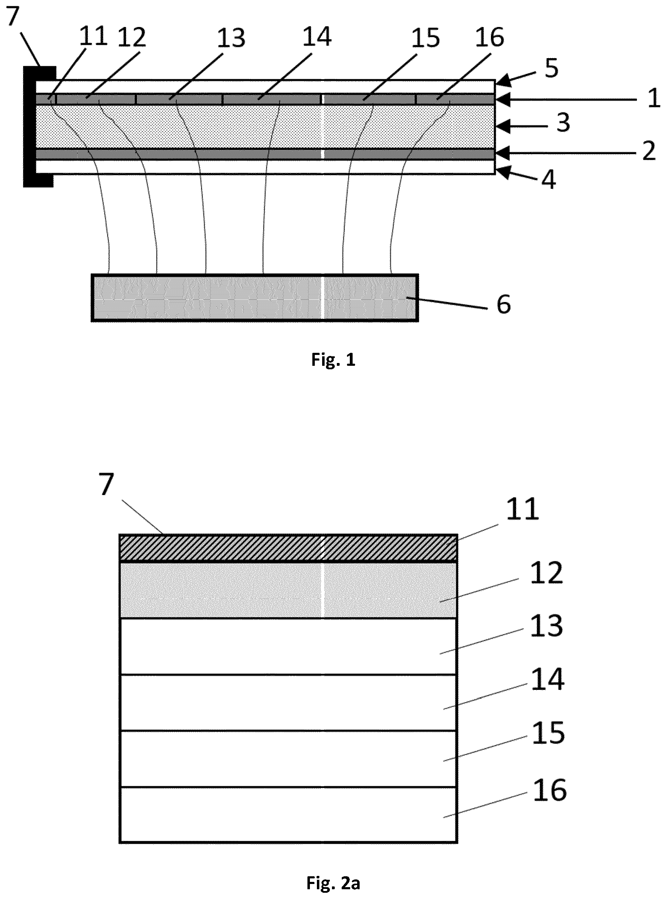

Figure 1 shows a schematic view of a first embodiment of a film arrangement according to the invention.

In this schematic view, the film arrangement comprises a first transparent electrode 1, a second transparent electrode 2 and an active optic material 3 arranged between the first 1 and the second 2 transparent electrodes. The active optic material 3 is in direct contact with the first 1 and the second 2 transparent electrodes.

The optical properties of this active optic material are defined by the voltage received by the same. When this received voltage overcomes a predefined threshold, the transparency of this material changes.

In some cases, the material is opaque when no voltage is applied and then changes from opaque to transparent when a voltage is applied between the two sides. In other cases, (called "reverse mode cases"), the material is transparent when no voltage is applied and then changes from transparent to opaque when a voltage is applied between the two sides.

In this particular embodiment, the active optic material 3 is a Polymer-Dispersed Liquid Crystal (PDLC), although in other embodiments also belonging to the invention, different materials may be used. Also, the transparent electrodes are Indium Tin Oxide (ITO), although in other cases, other types of transparent electrodes (such as silver nanowires, AgNW) may be used.

Each transparent electrode is deposited on a PET sheet 4, 5. Hence, the structure may be installed in a partition panel of an office, to cite some examples. In other embodiments, however, these electrodes may be installed in other substrates, such as glass panes, so that the structure may be installed in a house (either in a door or in a window).

In this figure, it is also seen how the first transparent electrode 1 is divided into a plurality of sections 11-16. Although seven first sections have been illustrated in this figure, this is just a generic example, the invention may be applied with any number of sections. These element sections are obtained by etching, which is usually done by laser cut. The final result is that each section is electrically independent. Each section of this first transparent electrode 1 has its electric connection.

In this case, the first section 11 is covered by a frame 7. This is done so that the first section may be activated or deactivated as required, but without this being noticed by an external user. The external user only sees five sections 12-16, so the shutter, in effective terms, only comprises these five sections 12-16. The first section 11 has only one adjacent section, which is the second section 12. In this case, only the first section 11 behaves as an auxiliary section, since all the rest of the sections 12-16 are effective sections, which are seen by the external user.

The second transparent electrode 2 is not divided into second sections, it is a single part without divisions.

A control unit 6 receives a standard AC voltage, transforms it into a DC voltage and then to an alternative square-wave. This control unit 6 is configured to provide phase shifted signals to the sections 11-16 of the first transparent conductive electrode 1.

This figure is simple on purpose, for the sake of understanding the invention since, in a real product, there may be dozens of different sections.

Figures 2a to 2c show different scenarios of use of a first example of smart film according to the invention. To show these scenarios, a plan view of the first transparent electrode is shown in these three figures 2a to 2c. In these figures, the first section 11 is shown as hidden below the frame 7.

In this first scenario, shown in figure 2a, only the first visible section (which is the second section 12, since the first section 11 is hidden by the frame) is required to be activated. To do so, the first section 11 (which is hidden) receives a first signal and the second section 12 (which is the first effective signal) receives a second signal from the control unit 6. Both first section 11 and second section 12 are activated, but only the second section 12 is seen as activated, since the first section, despite is activated, is not seen.

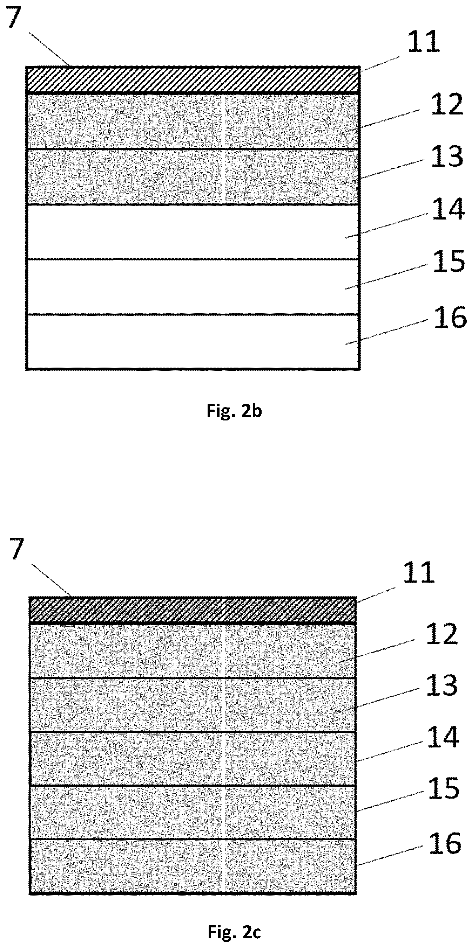

In the second scenario, shown in figure 2b, two visible sections (which correspond with the second section 12 and the third section 13) are required to be activated. In this case, the first section 11 is not needed to take part in the activation, since, as there is an even number of visible sections, they can be grouped in pairs (in this case, one pair) and be activated by feeding one of the sections with a first signal and the other one with a second signal. The difference between the first signal and the second signal will cause the PDLC portions corresponding to the two sections 12 and 13 to be activated.

In the third scenario, shown in Figure 2c, all the visible sections are required to be activated.

In this case, as in the first one shown in Figure 2a, there is an odd number of visible sections to be activated, so the first section 11 is needed to take part in the activation. As may be seen, when an even number of visible sections are required to be activated, there is no need to count on the first section 11, but when, as in this case, an odd number of visible sections are needed to be activated, the first section 11 is included in the activation, so that there is an even total number of sections.

In any of these scenarios, the methodology leads to common steps. Firstly, the number of visible sections to be activated is chosen. In a sequential activation or deactivation of the shutter, this number sequentially changes, but there is a first step (for example, when all the sections are activated). This will provide an initial number of visible sections to be activated.

If the number of visible sections to be activated is an even number, the total number of sections to be activated will coincide with the number of visible sections to be activated. However, if the number of visible sections is an odd number, the total number of sections to be activated will be the number of visible sections plus the first section 11. Hence, the total number of sections to be activated will always be an even number.

Once the total number of sections to be activated is selected, the sections will be divided into two groups: the odd sections and the even sections. The odd sections will receive a first signal from the control unit, while the even sections will receive a second signal from the control unit.

Hence, the sections to be activated will receive an electric signal from the control unit. The odd sections will receive a first signal and, since the total number of sections to be activated is an even number, every odd section will have an even section (which will receive a second signal) to form an activation pair, so that the sections are activated in pairs, due to the difference between the first signal and the second signal.

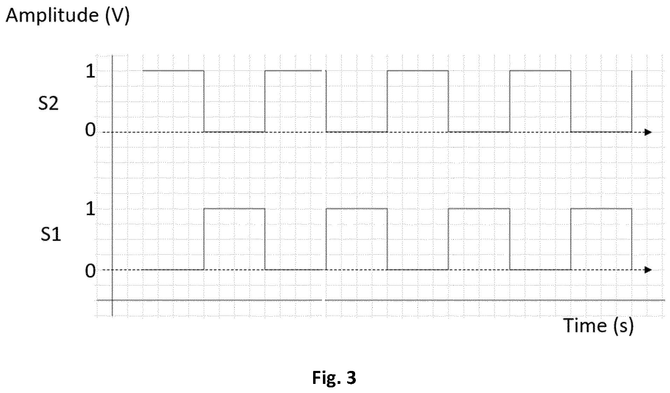

Figure 3 shows an example of a first signal and a second signal, to be used in the present invention.

In this case, the control unit comprises a first element configured to receive a sinusoidal alternate current and transform it to a direct current signal and comprises a second element configured to transform the direct current signal to an alternate square wave, and comprises a third element configured to create the first and second signals as phase-shifted signals from the square wave.

Hence, the first and the second signals are square wave signals, but are phase-shifted so that there is always a difference between them. This difference will be used by the PDLC to be activated.

## Claims

1. Smart film comprising a first transparent conductive electrode (1), a second transparent conductive electrode (2) and an active optic material (3) arranged between the first and the second transparent conductive electrodes (1, 2) in electric contact with the first and the second transparent conductive electrodes (1, 2),
wherein the active optic material (3) is configured to change at least one optical property when subject to an electrical voltage;
wherein the first transparent conductive electrode (1) is divided into a plurality of sections (11-16), the plurality of sections comprising a first section (11) and a plurality of intermediate sections (12-16), wherein the first section only neighbours with one intermediate section; and
wherein the smart film further comprises a frame (7),
**characterized in that**
the frame covers at least a portion of the first section.

2. Smart film according to claim 1, wherein the second transparent conductive electrode (2) does not comprise any electric connection.

3. Smart film according to any of the preceding claims, wherein each section is limited by a straight etching cut.

4. Smart film according to any of the preceding claims, wherein the smart film further comprises a control unit (6) configured to provide electric supply to each of the sections, wherein the control unit is configured to provide a first signal to a first group of sections and a second signal to a second group of sections, wherein each section of the first group is surrounded by at least one section of the second group and wherein each section of the second group is surrounded by at least one section of the first group.

5. Smart film according to claim 4, wherein the control unit (6) comprises a first element configured to receive a sinusoidal alternate current and transform it to a direct current signal and comprises a second element configured to transform the direct current signal to an alternate square wave, and comprises a third element configured to create the first and second signals as phase-shifted signals from the square wave.

6. Smart film according to any of the preceding claims, wherein the active optical material (3) has a thickness comprised between 5 and 100 micro-meters.

7. Smart film according to any of the preceding claims, wherein the first transparent conductive electrode (1) and/or the second transparent conductive electrode (2) comprises Indium Tin Oxide, silver nanowires, carbon nanotubes, graphene, transparent conductive polymers or nanometals.

8. Smart film according to any of the preceding claims, wherein the first transparent conductive electrode (1) is deposited on a first transparent substrate (4) and/or the second transparent conductive electrode (2) is deposited on a second transparent substrate (5).

9. Smart film according to claim 8, wherein the first transparent substrate (4) and/or the second transparent substrate (5) comprises a glass.

10. Smart film according to claim 8, wherein the first transparent substrate (4) and/or the second transparent substrate (5) comprises a plastic film, such a film made of polyethylene terephthalate.

11. Smart film according to any of claims 8 to 10, wherein the first transparent substrate (4) and/or the second transparent substrate (5) comprises an IR coating.

12. Smart film according to any of the preceding claims, wherein the active optical material (3) comprises a Polymer-Dispersed Liquid Crystal.

13. Smart film according to any of claims 1 to 12, wherein the active optical material (3) comprises a black dichroic dye Polymer Dispersed Liquid Crystal.

14. Method for operating a smart film according to any of the preceding claims, comprising the steps of
providing a number of visible sections to be activated;
if the number of visible sections to be activated is an odd number, add the first section to a total number of sections to be activated; otherwise, the total number of sections to be activated is the number of visible sections to be activated;
dividing the total number of sections in a first group of sections and in a second group of sections, wherein each section of the first group of sections is neighboured by at least one section of the second group and wherein each section of the second group is neighboured by at least one section of the first group; and
providing a first signal to the sections of the first group of sections and a second signal to the sections of the second group of sections.

15. Method according to claim 14, wherein the steps of providing the number of sections, dividing the number of sections and providing the first and second signals are repeated for different values of the number of sections.

## Patentansprüche

1. Intelligente Folie, umfassend eine erste transparente leitfähige Elektrode (1), eine zweite transparente leitfähige Elektrode (2) und ein aktives optisches Material (3), das zwischen der ersten und der zweiten transparenten leitfähigen Elektrode (1, 2) in elektrischem Kontakt mit der ersten und der zweiten transparenten leitfähigen Elektrode (1, 2) angeordnet ist,
wobei das aktive optische Material (3) dazu konfiguriert ist, mindestens eine optische Eigenschaft zu verändern, wenn es einer elektrischen Spannung ausgesetzt wird;
wobei die erste transparente leitfähige Elektrode (1) in eine Vielzahl von Abschnitten (11-16) unterteilt ist, wobei die Vielzahl von Abschnitten einen ersten Abschnitt (11) und eine Vielzahl von Zwischenabschnitten (12-16) umfasst, wobei der erste Abschnitt nur mit einem Zwischenabschnitt benachbart ist; und
wobei die intelligente Folie ferner einen Rahmen (7) umfasst,
**dadurch gekennzeichnet, dass**
der Rahmen mindestens einen Teil des ersten Abschnitts abdeckt.

2. Intelligente Folie nach Anspruch 1, wobei die zweite transparente leitfähige Elektrode (2) keine elektrische Verbindung umfasst.

3. Intelligente Folie nach einem der vorhergehenden Ansprüche, wobei jeder Abschnitt durch einen geraden Ätzschnitt begrenzt ist.

4. Intelligente Folie nach einem der vorhergehenden Ansprüche, wobei die intelligente Folie ferner eine Steuereinheit (6) umfasst, die dazu konfiguriert ist, jeden der Abschnitte mit Strom zu versorgen, wobei die Steuereinheit dazu konfiguriert ist, ein erstes Signal an eine erste Gruppe von Abschnitten und ein zweites Signal an eine zweite Gruppe von Abschnitten bereitzustellen, wobei jeder Abschnitt der ersten Gruppe von mindestens einem Abschnitt der zweiten Gruppe umgeben ist und wobei jeder Abschnitt der zweiten Gruppe von mindestens einem Abschnitt der ersten Gruppe umgeben ist.

5. Intelligente Folie nach Anspruch 4, wobei die Steuereinheit (6) ein erstes Element umfasst, das dazu konfiguriert ist, einen sinusförmigen Wechselstrom zu empfangen und in ein Gleichstromsignal umzuwandeln, und ein zweites Element umfasst, das dazu konfiguriert ist, das Gleichstromsignal in eine alternierende Rechteckwelle umzuwandeln, und ein drittes Element umfasst, das dazu konfiguriert ist, das erste und zweite Signal als phasenverschobene Signale aus der Rechteckwelle zu erzeugen.

6. Intelligente Folie nach einem der vorhergehenden Ansprüche, wobei das aktive optische Material (3) eine Dicke zwischen 5 und 100 Mikrometern aufweist.

7. Intelligente Folie nach einem der vorhergehenden Ansprüche, wobei die erste transparente leitfähige Elektrode (1) und/oder die zweite transparente leitfähige Elektrode (2) Indium-Zinn-Oxid, Silbernanodrähte, Kohlenstoffnanoröhren, Graphen, transparente leitfähige Polymere oder Nanometalle umfasst.

8. Intelligente Folie nach einem der vorhergehenden Ansprüche, wobei die erste transparente leitfähige Elektrode (1) auf einem ersten transparenten Substrat (4) und/oder die zweite transparente leitfähige Elektrode (2) auf einem zweiten transparenten Substrat (5) aufgebracht ist.

9. Intelligente Folie nach Anspruch 8, wobei das erste transparente Substrat (4) und/oder das zweite transparente Substrat (5) ein Glas umfasst.

10. Intelligente Folie nach Anspruch 8, wobei das erste transparente Substrat (4) und/oder das zweite transparente Substrat (5) eine Kunststofffolie umfasst, wie eine Folie aus Polyethylenterephthalat.

11. Intelligente Folie nach einem der Ansprüche 8 bis 10, wobei das erste transparente Substrat (4) und/oder das zweite transparente Substrat (5) eine IR-Beschichtung umfasst.

12. Intelligente Folie nach einem der vorhergehenden Ansprüche, wobei das aktive optische Material (3) einen polymerdispergierten Flüssigkristall umfasst.

13. Intelligente Folie nach einem der Ansprüche 1 bis 12, wobei das aktive optische Material (3) einen polymerdispergierten Flüssigkristall mit schwarzem dichroitischem Farbstoff umfasst.

14. Verfahren zum Bedienen einer intelligenten Folie nach einem der vorhergehenden Ansprüche, umfassend die folgenden Schritte:
Bereitstellen einer Anzahl von zu aktivierenden sichtbaren Abschnitten;
falls die Anzahl der zu aktivierenden sichtbaren Abschnitte eine ungerade Zahl ist, Hinzufügen des ersten Abschnitts zu einer Gesamtanzahl von zu aktivierenden Abschnitten; andernfalls ist die Gesamtanzahl von zu aktivierenden Abschnitten die Anzahl von zu aktivierenden sichtbaren Abschnitten;
Aufteilen der Gesamtanzahl der Abschnitte in eine erste Gruppe von Abschnitten und in eine zweite Gruppe von Abschnitten, wobei jeder Abschnitt der ersten Gruppe von Abschnitten von mindestens einem Abschnitt der zweiten Gruppe benachbart ist und wobei jeder Abschnitt der zweiten Gruppe von mindestens einem Abschnitt der ersten Gruppe benachbart ist; und
Bereitstellen eines ersten Signals für die Abschnitte der ersten Gruppe von Abschnitten und eines zweiten Signals für die Abschnitte der zweiten Gruppe von Abschnitten.

15. Verfahren nach Anspruch 14, wobei die Schritte des Bereitstellens der Anzahl von Abschnitten, des Aufteilens der Anzahl von Abschnitten und des Bereitstellens des ersten und zweiten Signals für unterschiedliche Werte der Anzahl von Abschnitten wiederholt werden.

## Revendications

1. Film intelligent comprenant une première électrode conductrice transparente (1), une deuxième électrode conductrice transparente (2) et un matériau optique actif (3) disposé entre la première et la deuxième électrodes conductrices transparentes (1, 2) en contact électrique avec la première et la deuxième électrodes conductrices transparentes (1, 2),
dans lequel le matériau optique actif (3) est configuré pour modifier au moins une propriété optique lorsqu'il est soumis à une tension électrique ;
dans lequel la première électrode conductrice transparente (1) est divisée en une pluralité de sections (11-16), ladite pluralité de sections comprenant une première section (11) et une pluralité de sections intermédiaires (12-16), dans lequel la première section ne jouxte qu'une section intermédiaire ; et
dans lequel ledit film intelligent comprend en outre un cadre (7),
**caractérisé en ce que**
ledit cadre recouvre au moins une partie de la première section.

2. Film intelligent selon la revendication 1, dans lequel la deuxième électrode conductrice transparente (2) ne comprend aucune connexion électrique.

3. Film intelligent selon l'une quelconque des revendications précédentes, dans lequel chaque section est limitée par une coupe de gravure rectiligne.

4. Film intelligent selon l'une quelconque des revendications précédentes, dans lequel ledit film intelligent comprend en outre une unité de commande (6) configurée pour fournir une alimentation électrique à chacune des sections, dans lequel l'unité de commande est configurée pour fournir un premier signal à un premier groupe de sections et un deuxième signal à un deuxième groupe de sections, dans lequel chaque section du premier groupe est entourée par au moins une section du deuxième groupe et dans lequel chaque section du deuxième groupe est entourée par au moins une section du premier groupe.

5. Film intelligent selon la revendication 4, dans lequel l'unité de commande (6) comprend un premier élément configuré pour recevoir un courant alternatif sinusoïdal et le transformer en un signal de courant continu et comprend un deuxième élément configuré pour transformer le signal de courant continu en une onde carrée alternative, et comprend un troisième élément configuré pour créer les premier et deuxième signaux sous forme de signaux déphasés à partir de l'onde carrée.

6. Film intelligent selon l'une quelconque des revendications précédentes, dans lequel le matériau optique actif (3) présente une épaisseur comprise entre 5 et 100 micromètres.

7. Film intelligent selon l'une quelconque des revendications précédentes, dans lequel la première électrode conductrice transparente (1) et/ou la deuxième électrode conductrice transparente (2) comprend de l'oxyde d'indium-étain, des nanofils d'argent, des nanotubes de carbone, du graphène, des polymères conducteurs transparents ou des nanométaux.

8. Film intelligent selon l'une quelconque des revendications précédentes, dans lequel la première électrode conductrice transparente (1) est déposée sur un premier substrat transparent (4) et/ou la deuxième électrode conductrice transparente (2) est déposée sur un deuxième substrat transparent (5).

9. Film intelligent selon la revendication 8, dans lequel le premier substrat transparent (4) et/ou le deuxième substrat transparent (5) comprend du verre.

10. Film intelligent selon la revendication 8, dans lequel le premier substrat transparent (4) et/ou le deuxième substrat transparent (5) comprend un film plastique, tel qu'un film en polyéthylène téréphtalate.

11. Film intelligent selon l'une quelconque des revendications 8 à 10, dans lequel le premier substrat transparent (4) et/ou le deuxième substrat transparent (5) comprend un revêtement IR.

12. Film intelligent selon l'une quelconque des revendications précédentes, dans lequel le matériau optique actif (3) comprend un cristal liquide dispersé dans un polymère.

13. Film intelligent selon l'une quelconque des revendications 1 à 12, dans lequel le matériau optique actif (3) comprend un cristal liquide dispersé dans un polymère avec colorant dichroïque noir.

14. Procédé de fonctionnement d'un film intelligent selon l'une quelconque des revendications précédentes, comprenant les étapes consistant à
fournir un nombre de sections visibles à activer ;
si le nombre de sections visibles à activer est un nombre impair, ajouter la première section à un nombre total de sections à activer ; sinon, le nombre total de sections à activer est le nombre de sections visibles à activer ;
diviser le nombre total de sections en un premier groupe de sections et en un deuxième groupe de sections, dans lequel chaque section du premier groupe de sections est voisine d'au moins une section du deuxième groupe et dans lequel chaque section du deuxième groupe est voisine d'au moins une section du premier groupe ; et
fournir un premier signal aux sections du premier groupe de sections et un deuxième signal aux sections du deuxième groupe de sections.

15. Procédé selon la revendication 14, dans lequel les étapes consistant à fournir le nombre de sections, à diviser le nombre de sections et à fournir les premier et deuxième signaux sont répétées pour différentes valeurs du nombre de sections.
